# EUROPEAN PATENT APPLICATION

(11) **EP 2 398 168 A1**
(43) Date of publication of application: **21.12.2011**
(21) Application number: 11168685.3
(22) Date of filing: 03.06.2011
(51) Int. Cl.: H04B 10/158, H04B 10/155

(54) **Technique for increasing signal gain**

(30) Priority: 17.06.2010 US 817243
(71) Applicant: ITT Manufacturing Enterprises, Inc., Wilmington, Delaware 19801 (US)
(72) Inventor: Wickholm, David, Beavercreek, OH 45432 (US); Cunningham, James, Dayton, OH 45419 (US)
(74) Representative: Dreiss

(57) **Abstract**

A technique for generating complementary signals for joint transmission involves generating a first signal having a first wavelength and a second signal having a second wavelength. The first signal is modulated with a first modulation to encode data, and the second signal is modulated with a second modulation, which is an inverted version of the first modulation, to encode the same data such that the first and second signals are complementary. The first and second signals are combined to produce a combined signal in which power attributable to the first signal is interleaved with and substantially non-overlapping temporally with power attributable to the second signal. The combined signal is amplified and then transmitted. The first and second signals can be optical signals at respective first and second optical wavelengths, where the first and second signals are on-off keying (OOK) modulated.

## Description

Optical communication systems are capable of transmitting data at very high data rates over long distances. On-off keying (OOK) is one type of modulation that can be used to encode data in optical signals. With OOK modulation, logical ones and zeros are represented in the signal by the sequential presence or absence of signal power, such that the signal alternates between substantially full power and no power. For a balanced modulation scheme in which the data encoding results in about the same number of logical ones and zeros, the signal is "on" approximately half of the time. The other half of the time, the signal is "off' and substantially no power is present in the transmitted signal. The absence of power about half of the time results in a 3 dB power loss relative to a signal having full power all of the time. This loss reduces the maximum operating range of communication terminals in the optical communication system.

Systems that achieve a 3 dB gain relative to OOK modulation are generally much more complex and require more complex hardware. Thus, techniques that avoid the 3 dB deficiency caused by OOK modulation typically add considerable size, weight, power consumption, and cost to the transmitter system. Accordingly, there remains a need for an optical transmitter system that takes full advantage of the available signal amplification and power within the system without introducing the additional size, weight, power consumption, and cost that are typically necessary to realize power gains.

### SUMMARY

A technique for generating complementary signals for joint transmission involves generating a first signal having a first wavelength and a second signal having a second wavelength. The first signal is modulated with a first modulation to encode data, and the second signal is modulated with a second modulation to encode the same data in an inverted manner. In particular, the second modulation is an inverted version of the first modulation such that the first and second signals are complementary. The first and second signals are combined to produce a combined signal in which power attributable to the first signal is interleaved with and substantially non-overlapping temporally with power attributable to the second signal. The combined signal is amplified and then transmitted.
The first and second signals can be optical signals at respective first and second optical wavelengths, where the first and second signals are on-off keying (OOK) modulated. In this context, the interleaving technique of the invention permits both the first and second signals to be amplified using a single amplifier, such as an erbium-doped fiber amplifier, while still permitting both signals to be amplified to the full extent of the power amplification available from the amplifier.
At a receiving terminal, the combined signal can be separated into the first and second signals, which are supplied to the inputs of a comparator for recovery of the data. By continuously using the full power of the transmitter system and detecting the transmitted signal in this manner, a 3 dB power gain can be realized relative to a comparable system employing OOK modulation on a single signal. Nevertheless, the second signal is generated and these power gains are realized without substantially increasing the size, weight, complexity, power consumption, and cost of the optical transmitter system.
The above and still further features and advantages of the present invention will become apparent upon consideration of the following definitions, descriptions and descriptive figures of specific embodiments thereof wherein like reference numerals in the various figures are utilized to designate like components. While these descriptions go into specific details of the invention, it should be understood that variations may and do exist and would be apparent to those skilled in the art based on the descriptions herein.

### BRIEF DESCRIPTION OF THE DRAWINGS

Fig. 1 is a top-level block diagram of an example transmitter system that illustrates the concepts of the invention.

Fig. 2 is a block diagram illustrating an optical implementation of the transmitter system shown in Fig. 1.

Fig. 3 is a signal timing diagram showing segments of the first and second complementary data signals generated by a transmitter system according to an implementation of the invention.

Fig. 4 is a diagram conceptually illustrating combining of the complementary data signals in an interleaved, non-overlapping manner.

Fig. 5 is a functional flow diagram illustrating the operations performed in generating the complementary data signals.

Fig. 6 is a block diagram illustrating an implementation of a receiver system for recovering data from the combined complementary data signals.

Fig. 7 is a functional flow diagram illustrating the operations performed in receiving and detecting the complementary data signals to recover data.

### DETAILED DESCRIPTION

Described herein is a technique for increasing the signal gain of a transmitted signal in a communication system. A first data stream is generated by modulating a first signal using on-off keying (OOK). A complementary second data stream is generated by OOK modulating a second signal with an inverted version of the first modulation, such that the second signal is "off" when the first signal is "on" and vice versa. The first and second signals have respective first and second different optical wavelengths. The complementary first and second signals can be combined such that the power of the first signal is interleaved with and temporally non-overlapping with the power of the second signal. The combined signal is substantially a constant power signal in which the first wavelength signal is "on" when the second wavelength signal is "off." In effect, the resulting signal is a frequency shift keying (FSK) modulated signal generated by combining two complementary OOK modulated signals.

At optical wavelengths, the combined first and second signals can be amplified with the same optical amplifier, such as an erbium-doped fiber amplifier. The optical amplifier sees what appears to be a continuous wave (CW) constant power signal. Since the full power of the amplifier is used continuously during transmission, the FSK signal enjoys a 3 dB gain relative to the individual constituent OOK modulated signals. Instead of having no signal to amplify during "off' periods of the original (first) OOK signal, the optical amplifier is used to amplify the second wavelength signal during the "off" periods of the first wavelength signal. Thus, instead of an x watt optical amplifier producing a signal with an x/2 average power, the x watt optical amplifier produces a signal with an average power of x, and the full peak power of the amplifier is obtained in the transmitted data signal. Nevertheless, this power gain is achieved without significantly increasing the size, weight, and hardware complexity of the transmitter system relative to a system that uses OOK modulation and without increasing the wall plug power cost of the system.

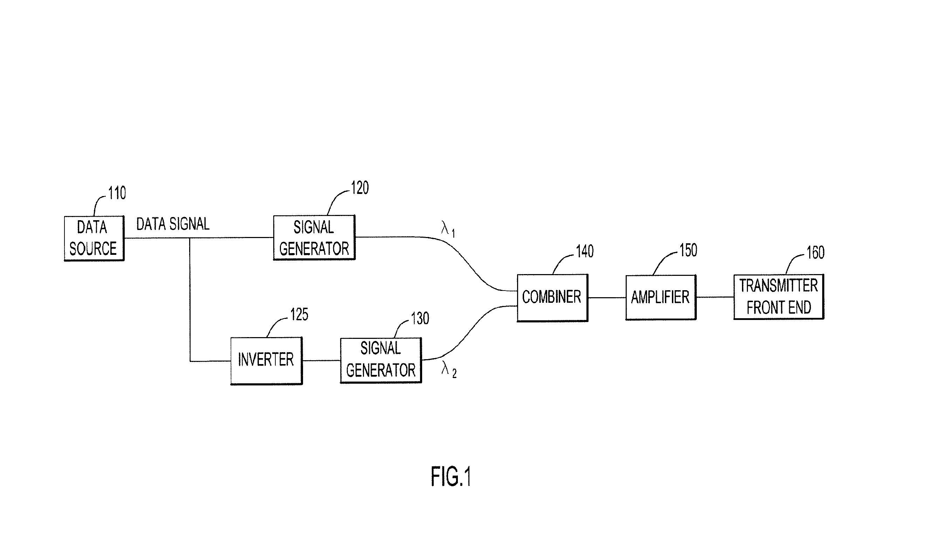

Fig. 1 is a top-level block diagram of an example transmitter system that illustrates the concepts of the invention. A data signal is supplied by a data source 110, such as a modem. The data signal can be an electrical signal encoded with data to be transmitted to a far-end terminal. For example, data source 110 can encode data into the data signal via on-off keying (OOK) at a selected modulation rate suitable for optical transmission. With OOK modulation, the data signal sequentially alternates between a first power level and a second power level that is preferably a very low or zero power level, resulting in intervals of full power and intervals of substantially no power. A logical "0" can be represented by the absence of power over an interval, and a logical "1" can be represented by the presence of power over an interval, or vice versa. Optionally, an encoding scheme can be employed which ensures an on/off duty cycle of about 50% (i.e., the signal is at full power about half of the time and at zero power about half of the time). To convey information rapidly, the modulation rate can be at least one megahertz (MHz) and may be many orders of magnitude higher, possibly exceeding one or many gigahertz (GHz).

The data signal can be used to transmit virtually any type of information or data including, but not limited to: sensor data, navigation signals, voice/audio signals, image signals, video signals, data relating to an application running on a processor, control signals, and overhead or communication protocol signals (e.g., relating to the communication protocol, handshaking, routing, equipment configuration, etc.). In particular, sensors that collect information for intelligence, surveillance, and reconnaissance generate a substantial amount of data and can benefit from the high data rates employed in optical communications to transmit the information in a reasonable amount of time.

The data signal is supplied to a first signal path and to a second signal path that is in parallel with the first signal path. A first signal generator 120 is disposed on the first signal path and converts the data signal to a first signal at a first wavelength λ₁,which is supplied as an output. The output first signal preserves the data modulation contained in the original data signal.

An inverter 125 and a second signal generator 130 are disposed on the second signal path. Inverter 125 generates an inverted version of the data signal. In particular, the output of inverter 125 is an OOK modulated signal in which the signal is "on" during intervals in which the original data signal is "off" and vice versa. Signal generator 130 converts the inverted data signal to a second signal at a second wavelength λ₂ that is different from the first wavelength λ₁. The second signal preserves the data modulation of the original data signal, but the second signal has power during time intervals in which the first signal has substantially no power, and the second signal has substantially no power during the time intervals in which the first signal has power. While shown in Fig. 1 upstream of signal generator 130, inverter 125 can be located downstream of signal generator 130.

A combiner 140 receives the first and second signals from first and second signal generators 120 and 130, respectively, and combines the first and second signals into a combined signal on a common output path. Due to inversion of the second signal relative to the first signal, within the combined signal, power attributable to the first signal is interleaved with and substantially non-overlapping temporally with power attributable to the second signal. The combined signal is supplied to an amplifier 150, which amplifies the combined signal. In this manner the same amplifier amplifies both the first and second signals without sacrificing full amplification of either signal. The amplified, combined signal is then supplied to a transmitter front-end 160, which transmits the combined signal via the transmission medium employed in the communication system. In the case of free-space communications, the front-end 160 can be an antenna (e.g., for RF signals) or optics (e.g., for optical signals). In the case of transmission media such as wire, cable, or optical fiber, the combined and amplified signal can be supplied directly to the transmission medium without a free-space interface.

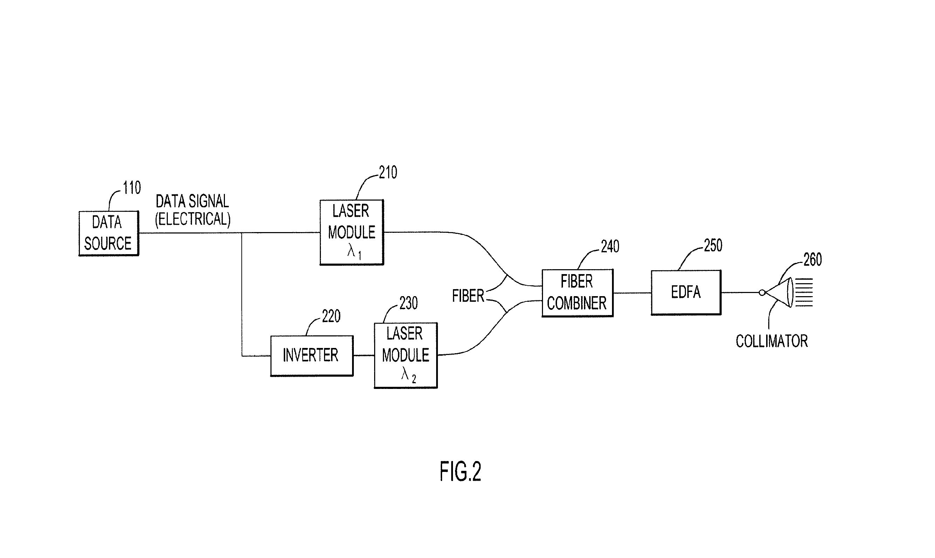

Fig. 2 is a block diagram illustrating an optical implementation of the transmitter system shown in Fig. 1. In this example, the first signal generator 120 comprises an optical signal generator such as a laser module 210. By way of a non-limiting example, laser module 210 can be a tunable laser seed module such as a commercially available small form-factor pluggable (SFP) laser module that provides an interface between a device supplying data (e.g., Ethernet traffic) and an optical fiber. In this example, laser module 210 converts the data signal supplied from data source 110 in electrical form to an optical signal at the first wavelength λ₁ and conveys the first signal on an optical fiber.

The inverter 125 on the second signal path comprises an electrical inverter 220, and the second signal generator 130 on the second signal path comprises an optical signal generator such as a laser module 230, which can be similar to laser module 210. Inverter 220 receives the data signal in electrical form and generates an electrical output signal that is the logical opposite of the data signal (i.e., the output signal is a logical "1" when the data signal is a logical "0," and the output signal is a logical "0" when the data signal is a logical "1"). The inverted data signal is then supplied along the second signal path to laser module 230, which converts the input electrical signal to an optical signal at the second optical wavelength λ₂ to produce the second signal, which is conveyed on an optical fiber.

By way of example, the optical wavelengths of the first and second signals can be in the eye-safe region of the spectrum (i.e., wavelengths longer than about 1.4 microns), such as wavelengths in the telecommunications C and L bands or between about 1530 nm and 1600 nm. These wavelengths permit commercially-available optical components to be used in the laser transceiver. Nevertheless, the invention is not limited to any particular range of optical wavelengths. Thus, as used herein and in the claims, the term "optical" refers generally to the range of wavelengths of electromagnetic signals within which "optical" equipment (e.g., optical communication equipment, transmitters, receivers, etc.) typically operates, including the visible spectrum, infrared wavelengths, and ultraviolet wavelengths.

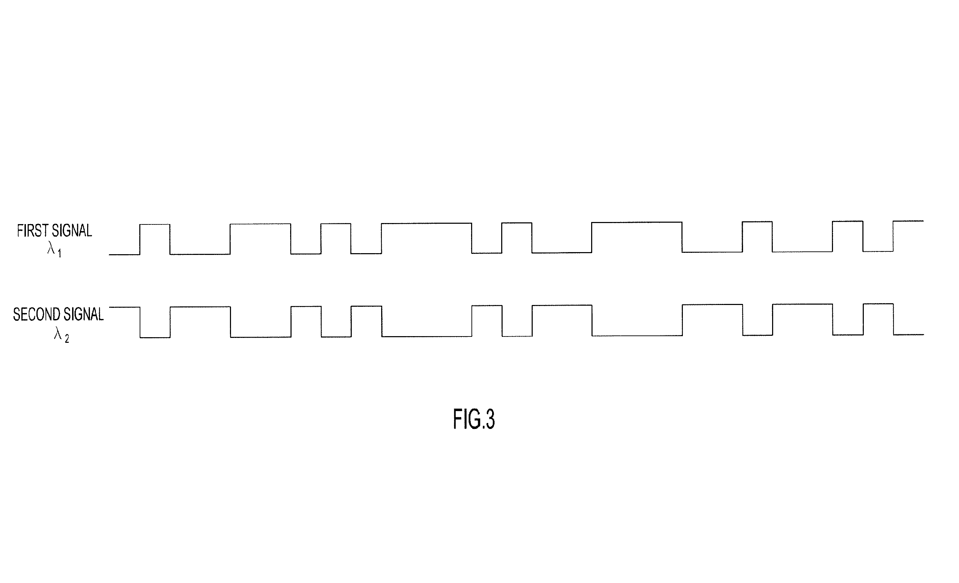

Fig. 3 is a timing diagram showing representative portions of the first and second signals one above the other for comparison. The first signal comprises a sequence of logical ones and zeros resulting in a signal that alternates between a first state in which power is present and a second state in which substantially no power is present in accordance with the data values being transmitted. The second signal contains the same data modulation as the first signal, except that the second signal comprises inverted data whose logical state is the opposite of that of the first signal, such that the second signal contains power during the intervals in which the first signal does not contain power, and the second signal does not contain power during the intervals in which the first signal contains power (i.e., the first and second signals are complementary).

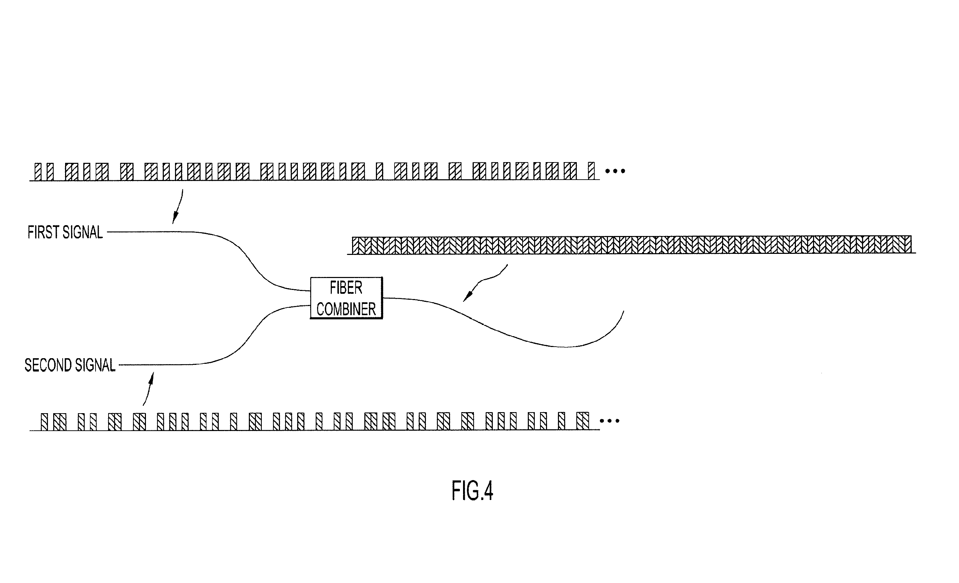

Referring again to Fig. 2, an optical combiner such as a fiber combiner 240 combines the first and second signals in fiber. Fig. 4 illustrates the effect of combining the first and second signals. In the combined signal, the portions of the first signal containing signal power (shown with left-to-right upward-slanting cross hatching in Fig. 4) are interleaved with the portions of the second signal containing signal power (shown with left-to-right downward-slanting crosshatching in Fig. 4) such that the power of the two signals is substantially non-overlapping temporally. The two signals are still distinguishable by virtue of their different wavelengths. Note that both signals within the combined signal essentially contain the same data and are, in effect, redundant. In other words, in principle, the same encoded data could be recovered from either signal without the complementary signal (although it may be necessary to account for inversion of the data modulation in the case of the second signal). The resulting combined signal is essentially a frequency shift keying (FSK) modulated signal constructed from two complementary OOK modulated signals, wherein logical ones are represented with one frequency and logical zeros are represented with a different frequency.

In the case of free-space transmission, another benefit to this scheme compared to a standard OOK modulated signal is the covertness of the modulated signal. If a third party observes the signal with a detector, only a CW (continuous wave), constant power signal will be seen. Unlike an OOK signal, the underlying modulation will not be visible unless the detector is sophisticated enough to filter the signal spectrally. Thus, the combined signal also provides a Low Probability of Intercept (LPI) relative to a standard OOK signal.

As shown in Fig. 2, the amplifier can be implemented with a single mode erbium-doped fiber amplifier (EDFA) 250 whose output can be supplied to a collimator 260 which receives the combined signal at the fiber end and supplies a free space collimated beam to transmitter optics. According to another option, the output of EDFA can be supplied to a fiber optic transmission medium. The wavelengths of the first and second signals λ₁, λ₂ can be selected to be within the amplification band of EDFA 250. If, for example, EDFA 250 has a peak power of 5 watts, a typical data stream, with an equal number of logical zeros and ones, will have an average data power of 2.5 watts. By using the logical zero slots of the first signal for transmission of the second signal, the combined signal will have an average power of 5 watts (i.e., substantially equal to the peak power).

While the system shown in Fig. 2 involves optical signals being conveyed, combined, and amplified via optical fibers and a fiber amplifier, the principles of the invention can be employed in the context of any of a wide variety of signal conveying, combining, and amplifying mechanisms. For example, the complementary signals can be combined and amplified in free space rather than in fiber. More generally, the principles of the invention can be employed in systems using non-optical wavelengths, such as RF systems.

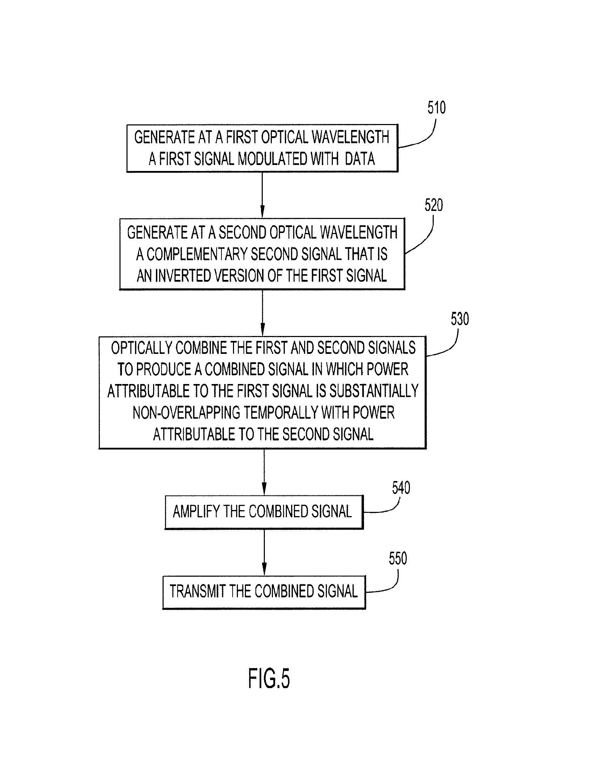

Fig. 5 is a functional flow chart summarizing the operations performed to generate complementary first and second optical signals, as described above in connection with Figs. 1-4. In operation 510, a first signal modulated with data is generated at a first optical wavelength. In operation 520, a complementary second signal that is an inverted version of the first signal is generated at a second optical wavelength. The first and second signals are optically combined in operation 530 to produce a combined signal in which power attributable to the first signal is interleaved with and substantially non-overlapping temporally with power attributable to the second signal. The combined signal is then amplified (operation 540) and transmitted (operation 550).

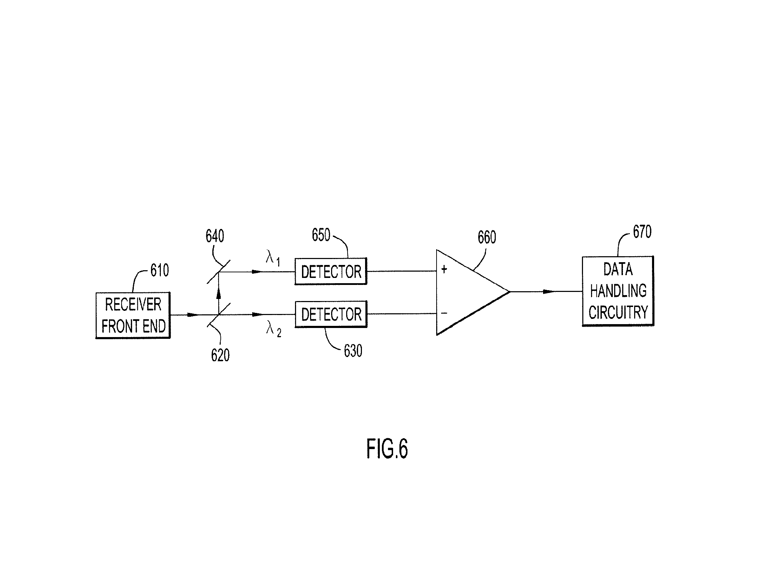

At the receiving end, the combined signal can be separated into the constituent first and second signals, and a differential detection scheme can be employed to recover the data signal. A block diagram of an example of a receiver system for detecting the interleaved first and second signals is shown in Fig. 6. The combined signal is received via a receiver front end which, in the case of an optical system, can be receiver optics 610 (e.g., lenses, mirrors, etc.) that direct the signal along a signal path for processing. According to other implementations, the signal may arrive at the receiver via an optical fiber, a wire, a coaxial cable, etc. In the example shown in Fig. 6, the combined signal can be directed from free space into an optical fiber or remain a free-space beam. A beamsplitter 620 separates the combined signal into the first signal at the first wavelength λ₁ and the second signal at the second wavelength λ₂. For example, beamsplitter 620 can be configured to reflect substantially all light at the first wavelength λ₁ and to transmit substantially all light at the second wavelength λ₂ or vice versa. The first and second signals are then separately conveyed along parallel paths.

After separation, the second signal is supplied to an optical detector 630 configured to convert the optical second signal to an electrical signal. Optical detector 630 can be any photo-electric detector (photodetector) capable of converting an optical signal into an electrical signal, such as a photodiode (e.g., a PIN diode or an avalanche photodiode (APD)). The output electrical signal preserves the modulation contained in the input optical signal. In the example shown in Fig. 6, the first optical signal reflected by beamsplitter 620 is directed by a mirror 640 along another path to another optical detector 650, which converts the optical first signal into an electrical signal in substantially the same manner that optical detector 630 converts the second signal.

The first and second electrical signals are respectively supplied to the noninverting (+) and inverting (-) inputs of a differential amplifier 660 (e.g., an operational amplifier) configured as a comparator whose output depends on the difference between the amplitudes of the first and second signals. For example, if there is more power on one input than the other, the output signal is in one logical state, and if there is more power on the other input, the output signal is in the other logical state. In effect, the differential detection results in a 3 dB signal power gain at the output of the differential amplifier 660 relative to detection of an individual OOK signal. This 3 dB gain is due to the fact that an OOK signal represents the two logical states with full power and no power signals, respectively, such that a detection threshold must lie between these two states. The differential signal generated from the dual OOK signals produces a more discernable difference between the representations of the two logical states in the output signal.

The output of the amplifier 660 is a sequence of logical ones and zeros representing the original data and is supplied to data handling circuitry 670 to recover the original data transmitted via the combined signal. The differential detection also helps remove background light, since any interference would be added equally to both detectors and be present at both amplifier inputs, but would not affect the offset between the two signals. By continuously using the full power of the transmitter system and detecting the transmitted signal in this manner, a 3 dB power gain can be realized relative to a comparable system employing OOK modulation on a single signal. Nevertheless, the second signal is generated and these power gains are realized without substantially increasing the size, weight, complexity, power consumption, and cost of the optical transmitter system.

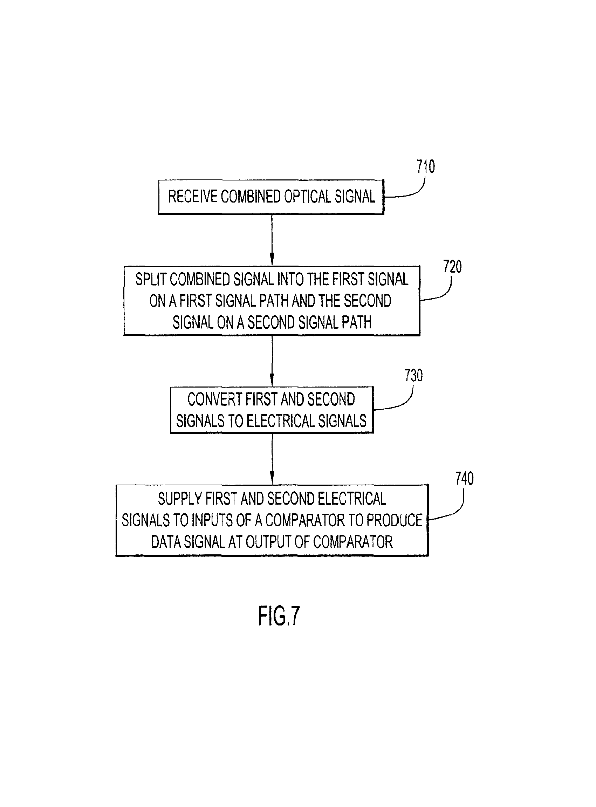

Fig. 7 is a functional flow chart summarizing the operations performed to recover data from a received optical signal that is the combination of first and second complementary signals, as described above in connection with Fig. 6. In operation 710, a combined optical signal containing first and second complementary signals is received. In operation 720, the combined signal is split into the first signal on a first path and a second signal on a second path. The first and second optical signals are converted to electrical signals in operation 730 and respectively supplied to the two inputs of a comparator to produce a data signal at the output of the comparator in operation 740.

The complementary first and second signals can be generated by any of a wide variety of devices, and the invention is not limited to these examples. Regardless of the particular mechanisms used, creation of the signals requires that the signals can be combined in an interleaved manner without the power attributable to the two signals substantially temporally overlapping so that the signals can be fully amplified by a common amplifier. This is accomplished in this example by having the second signal include the same data modulation pattern as the first signal but in an inverted form.

The transmitter system for generating complementary first and second interleaved signals described herein can be employed in an optical (e.g., laser) communication terminal designed to operate in a laser communication system with moving platforms, where the relative positions of terminals change over time. The system can include, for example, terminals mounted on airborne platforms, satellites, ships, watercraft, or ground vehicles, as well as stationary terminals that communicate with terminals mounted on moving platforms (e.g., combinations of air-to-air and air-to-ground links).

While the invention has been described in the context of free space optical communications, more generally the concepts of the invention can be used in any optical communication system including those that employ fiber optic transmission media. Moreover, while the signal generation techniques described herein are particularly well-suited for optical systems, the concepts of the invention are equally applicable at other wavelengths, including RF wavelengths.

Having described preferred embodiments of a new and improved technique for increasing signal gain, it is believed that other modifications, variations and changes will be suggested to those skilled in the art in view of the teachings set forth herein. It is therefore to be understood that all such variations, modifications and changes are believed to fall within the scope of the present invention as defined by the appended claims. Although specific terms are employed herein, they are used in a generic and descriptive sense only and not for purposes of limitation.

## Claims

1. A method of generating complementary signals for joint transmission, the method comprising:
generating a first signal having a first wavelength, the first signal being modulated with a first modulation to encode data;
generating a second signal having a second wavelength, the second signal being modulated with a second modulation to encode said data, the second modulation being an inverted version of the first modulation such that the first and second signals are complementary;
combining the first and second signals to produce a combined signal in which power attributable to the first signal is interleaved with and substantially non-overlapping temporally with power attributable to the second signal;
amplifying the combined signal; and
supplying the combined signal to a transmission medium.

2. The method of claim 1, wherein the first and second modulations are on/off keying (OOK) modulation.

3. The method of claim 1 or 2, wherein the combined signal has a substantially constant power.

4. The method of one of the preceding claims, wherein the first and second signals are optical signals and the combined signal is amplified by an erbium-doped fiber amplifier (EDFA).

5. The method of one of the preceding claims, further comprising:
supplying a common data signal to a first path and a second path, wherein:
the first signal is generated from the common data signal on the first path; and
the second signal is generated by inverting the common data signal on the second path.

6. The method of claim 5, wherein generating the first signal comprises converting the common data signal on the first signal path to an optical signal at the first wavelength.

7. The method of claim 5, wherein generating the second signal further comprises converting the common data signal on the second signal path to an optical signal at the second wavelength, wherein converting of the common data signal to an optical signal is performed downstream or upstream of the inverting of the common data signal.

8. The method of one of the preceding claims, for detecting jointly transmitted complementary signals, the method comprising:
receiving a combined signal comprising first and second complementary signals in which power attributable to the first signal is interleaved with and substantially non-overlapping temporally with power attributable to the second signal, the first signal having a first wavelength and the second signal having a second wavelength;
splitting the combined signal into the first signal on a first path and the second signal on a second path such that the second signal is an inverted version of the first signal; and
comparing the first signal to the second signal to recover data encoded in the first and second signals;
wherein in particular the first and second complementary signals are optical signals.

9. An apparatus for generating complementary signals for joint transmission, comprising:
a first signal generator configured to generate a first signal having a first wavelength, the first signal being modulated with a first modulation to encode data;
a second signal generator configured to generate a second signal having a second wavelength, the second signal being modulated with a second modulation to encode said data, the second modulation being an inverted version of the first modulation such that the first and second signals are complementary;
a combiner configured to combine the first and second signals to produce a combined signal in which power attributable to the first signal is interleaved with and
substantially non-overlapping temporally with power attributable to the second signal; and
an amplifier configured to amplify the combined signal prior to transmission.

10. The apparatus of claim 9, wherein the first and second modulations are on/off keying (OOK) modulation.

11. The apparatus of claim 9 or 10, wherein the combiner generates the combined signal having a substantially constant power.

12. The apparatus of one of claims 9 to 11, wherein the first and second signals are optical signals and the amplifier comprises an erbium-doped fiber amplifier (EDFA).

13. The apparatus of one of claims 9 to 12, wherein:
the first signal generator comprises a first laser module disposed along a first path configured to receive a common data signal, the first laser module being configured to convert the common data signal to the first signal at the first optical wavelength;
the second signal generator comprises a second laser module disposed on a second path configured to receive the common data signal, the second laser module being configured to convert the common data signal to an optical signal at the second optical wavelength; and
the apparatus further comprises an inverter disposed along the second path either upstream or downstream of the second laser module and configured to invert a received signal, such that the inverter and second laser module convert the common data signal to the second signal at the second wavelength.

14. The apparatus of claim 13, wherein the first and second laser modules are tunable laser seed modules.

15. The apparatus of one of claims 9 to 14, comprising:
an optical receiver system, comprising:
receiver optics configured to receive a combined signal comprising first and second complementary signals in which power attributable to the first signal is interleaved with and substantially non-overlapping temporally with power attributable to the second signal, the first signal having a first optical wavelength and the second signal having a second optical wavelength;
a beamsplitter configured to split the combined signal into the first signal on a first path and the second signal on a second path such that the second signal is an inverted version of the first signal; and
a first photodetector disposed along the first path and configured to convert the first signal to a first electrical signal;
a second photodetector disposed along the second path and configured to convert the second signal to a second electrical signal; and
a comparator having first and second input differential inputs configured to respectively receive the first and second electrical signals, the comparator generating a data signal based on a comparison of the first and second electrical signals; and wherein in particular the comparator comprises a differential amplifier.
